# EUROPÄISCHE PATENTSCHRIFT

(11) **EP 1 347 428 B1**
(45) Veröffentlichungstag und Bekanntmachung des Hinweises auf die Patenterteilung: **15.12.2004**
(21) Anmeldenummer: 03006450.5
(22) Anmeldetag: 21.03.2003
(51) Int. Cl.: G08G 1/0968, G01C 21/34

(54) **Handheld Computer, sowie Verfahren zum Navigieren**
Portable computer associated with a method of navigation
Ordinateur portable associé à un procédé de navigation

(30) Priorität: 23.03.2002 DE 20204697 U
(43) Veröffentlichungstag der Anmeldung: 24.09.2003
(73) Patentinhaber: Global Navigation Systems GNS-GmbH, 51379 Leverkusen (DE)
(72) Erfinder: Skaliks, Peter, 52146 Würselen (DE); Bierwisch, Bernd, 52076 Aachen (DE)
(74) Vertreter: Dallmeyer, Georg, Dipl.-Ing.

(56) Entgegenhaltungen:
- WO-A-02/23924
- US-B1- 6 317 684
- PATENT ABSTRACTS OF JAPAN vol. 1998, no. 08, 30. Juni 1998 (1998-06-30) & JP 10 063728 A (HITACHI LTD), 6. März 1998 (1998-03-06)

## Beschreibung

Die Erfindung betrifft einen Handheld Computer nach dem Oberbegriff des Anspruchs 1, sowie ein Verfahren nach Anspruch 10.

Handheld Computer, die in Verbindung mit einem Navigationssystem verwendet werden, sind bereits bekannt, beispielsweise aus der JP1063728.

Der Erfindung liegt die Aufgabe zugrunde, eine mit Verkehrsinformationen aktualisierte Navigation mit einem handelsüblichen Handheld Computer zu ermöglichen, sowie ein Verfahren zum Navigieren anzugeben, das unter Verwendung eines handheld Computers eine Navigation unter Berücksichtigung von Verkehrsinformationen in Echtzeit ermöglicht.

Zur Lösung dieser Aufgabe dienen die Merkmale des Anspruchs 1 bzw. 10.

Die Erfindung sieht in vorteilhafter Weise vor, dass die CPU über eine einzige Hardwareschnittstelle mit einer von einer Recheneinheit gesteuerten Anschlusseinrichtung mit mindestens zwei bidirektionalen Hardwareschnittstellen verbunden ist, die einerseits digitale Positionsdaten von einem Positionsdatenempfänger und andererseits digitale Verkehrsinformationsdaten von einem Verkehrsinformationsempfänger erhält und. diese digitalen Datensignale zu einem einzigen seriellen Datensignalstrom zusammenfasst, der über die einzige Hostschnittstelle der Anschlusseinrichtung und eine einzige Hardwareschnittstelle des handheld Computers übertragbar ist, dass in einem Speicherbereich des handheld Computers ein Dekoderprogramm einlesbar ist, das den seriellen Datensignalstrom von der Anschlusseinrichtung zur Weiterverarbeitung durch ein Anwendungsprogramm in die ursprünglichen Dateninhalte des Positionsdatenempfängers und des Verkehrsinformationsempfängers aufteilt. Die Zusammenfassung der digitalen Datensignale online bedeutet, dass die zeitliche Zuordnung der Datensignale in für die Navigation notwendigen Weise erhalten bleibt.

Die Erfindung ermöglicht die Übertragung von Positions- und Verkehrsinformationen über eine einzige Datenleitung. Dadurch ist es möglich, handelsübliche handheld Computer als Navigationssystem zu verwenden, wobei die Navigationssoftware eine von der Verkehrslage abhängige dynamische Streckenberechnung ausführen kann, indem simultan Verkehrsinformationen dem Handheld Computer zugeführt werden. Hierzu wird die mit der einzigen Hardwareschnittstelle verbundene Datenleitung verwendet.

Die Positionssignale aus einem Positionsdatenempfänger, z.B. einem Global Positioning System, und die Verkehrinformationssignale werden in einer Anschlusseinrichtung zunächst zusammengeführt und über eine einzige Host-Schnittstelle der Anschlusseinrichtung an eine einzige Hardware-Schnittstelle des handheld Computers übertragen. Im handheld Computer werden dann die gemischten Signale wieder aufgetrennt und einem Anwendungsprogramm zugeführt. Die Datenübertragung kann online erfolgen und benötigt keine Zwischenspeicherung.

Weitere vorteilhafte Ausbildungen der Erfindung sind in den Unteransprüchen angegeben.

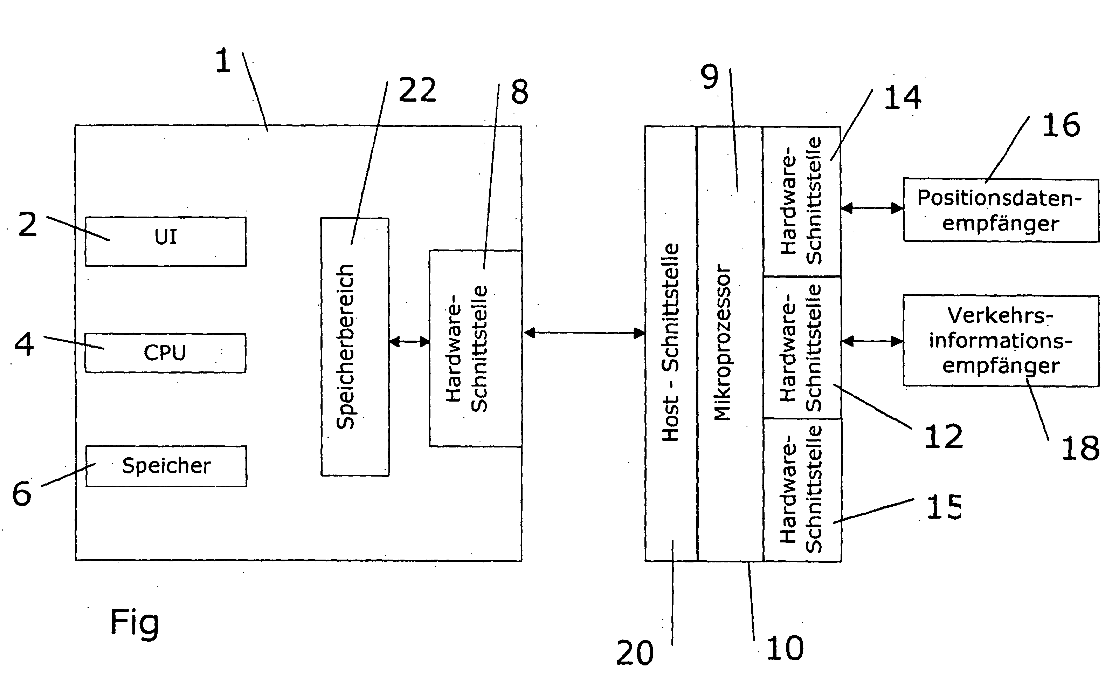

Im folgenden wird unter Bezugnahme auf die Zeichnung ein Ausführungsbeispiel der Erfindung näher erläutert.

Die einzige Figur zeigt einen handheld Computer 1 mit einem User-Interface 2, das aus einem Display und einer Tastatur oder einem Touch-Screen besteht. Der handheld Computer 1 weist ferner eine CPU 4 auf, sowie einen Speicher 6 und ist mit mindestens einer Hardware-Schnittstelle 8 versehen.

Eine Anschlusseinrichtung 10 mit einer einzigen bidirektionalen Host-Schnittstelle 20 ist über diese Schnittstelle mit der einzigen bidirektionalen Hardware-Schnittstelle 8 des handheld Computers 1 über ein Verbindungskabel oder über eine Infrarotverbindung oder über eine Funkverbindung angeschlossen.

Die Anschlusseinrichtung 10 weist eine Recheneinheit, z.B. einen Mikroprozessor 9 oder eine andere Logikeinheit auf, mit deren Hilfe die von einem Positionsdatenempfänger 16 erhaltenen Positionsdaten und die von einem Verkehrsinformationsempfänger 18 simultan erhaltenen Verkehrsinformationsdaten zu einem einzigen seriellen Datensignalstrom online zusammengefasst und der einzigen Host-Schnittstelle 20 zugeführt werden.

An den Hardwareschnittstellen 12 und 14 sind ein Positionsdatenempfänger in Form eines GPS-Empfangsmoduls mit serieller Schnittstelle und ein Verkehrsdatenempfänger in Form eines FM-Tuners mit nachgeschaltetem RDS-Decoderbaustein angeschlossen. Die Schnittstelle 12 ist dabei als I2C Schnittstelle ausgeführt. Beide Schnittstellen sind so aufgebaut, dass ein Interrupt im Mikroprozessor 9 ausgelöst wird, wenn Daten anstehen.

Im Mikroprozessor 9 werden die Daten in einem internen Puffer-Speicher aufgefangen und, damit ein problemloses Timing ermöglicht wird, mit einer höheren Datenrate über die serielle Host-Schnittstelle 20 ausgegeben. Dabei werden die RDS-Gruppen in den GPS- Datenstrom eingefügt und zusätzlich mit einem Erkennungszeichen versehen, um eine spätere Dekodierung zu ermöglichen. Dieses Verfahren ermöglicht die Verarbeitung und Weiterleitung der eintreffenden Daten mit geringsten Zeitverlusten und einem sehr kleinen Pufferspeicher.

Um die an den Schnittstellen 12 und 14 angeschlossenen Empfänger 16,18 mit Steuerungsinformationen zu versorgen, hier ist insbesondere die Steuerung des Verkehrsinformationsempfängers zu nennen, sind alle Schnittstellen 12,14,20 bidirektional ausgeführt. Werden von dem als Hostrechner dienenden handheld Computer 1 Steuerungsdaten gesendet, so werden diese über die Schnittstelle 20 empfangen und durch den Mikroprozessor 9 ausgewertet. Abhängig von der Art der Steuerungsdaten werden die Empfänger 16,18 entsprechend angesteuert, das Verhalten der Anschlusseinrichtung beeinflusst oder es werden Statusinformationen ermittelt. Der Mikroprozessor 9 übermittelt sodann einen Datensatz, welcher eine Bestätigung der Steuerungsdaten und weitere Informationen enthält, an den handheld Computer 1. Dabei enthalten die Informationen im Falle von Steuerungsdaten, die eine Empfangsfrequenz des FM-Tuners enthalten, auch Angaben über die Empfangsqualität. Im Falle unbekannter oder fehlerhafter Steuerungsdaten wird eine Fehlermeldung zurückgesendet.

Das Dekoderprogramm im Speicherbereich 22 des handheld Computers 1 liest die Daten von der Schnittstelle (8) ein und trennt die Daten durch Auswertung des Erkennungszeichens und der Anfangs- und Endezeichen der Positionsdaten wieder auf. Weiterhin werden im Dekoderprogramm bei Bedarf die Steuerungsdaten gebildet und an die Anschlusseinrichtung versendet, sowie die Rückmeldungen der Anschlusseinrichtung ausgewertet.

Sodann werden die Daten einer Vorauswertung unterzogen, in Datenstrukturen abgelegt und über eine Softwareschnittstelle einem Anwendungsprogramm verfügbar gemacht.

## Patentansprüche

1. Handheld Computer (1) mit einem User-Interface (2), mit einer CPU (4), mit mindestens einem Speicher und mit mindestens einer Hardwareschnittstelle (8),
**dadurch gekennzeichnet,**
**dass** die CPU (4) über eine einzige Hardwareschnittstelle (8) mit einer von einer Recheneinheit (9) gesteuerten Anschlusseinrichtung (10) mit mindestens zwei bidirektionalen Hardwareschnittstellen (12,14,15) verbunden ist, die einerseits digitale Positionsdaten von einem Positionsdatenempfänger (16) und andererseits digitale Verkehrsinformationsdaten von einem Verkehrsinformationsempfänger (18) erhält und diese digitalen Datensignale zu einem einzigen seriellen Datensignalstrom zusammenfasst, der über die einzige Hostschnittstelle (20) der Anschlusseinrichtung (10) und die einzige Hardwareschnittstelle (8) des Handheld Computers (1) übertragbar ist, dass in einen Speicherbereich (22) des Handheld Computers (1) ein Dekoderprogramm einlesbar ist, das den seriellen Datensignalstrom von der Anschlusseinrichtung (10) zur Weiterverarbeitung durch ein Anwendungsprogramm in die ursprünglichen Dateninhalte des Positionsdatenempfängers (16) und des Verkehrsinformationsempfängers (18) aufteilt.

2. Handheld Computer nach Anspruch 1, **dadurch gekennzeichnet, dass** an einer weiteren bidirektionalen Hardwareschnittstelle (15) der Anschlusseinrichtung (10) eine Datenkommunikationseinrichtung angeschlossen ist.

3. Handheld Computer nach Anspruch 2, **dadurch gekennzeichnet, dass** die Datenkommunikationseinrichtung aus einer Datenfunkübertragungseinrichtung besteht.

4. Handheld Computer nach Anspruch 3, **dadurch gekennzeichnet, dass** die Datenfunkübertragungseinrichtung aus einem Funktelefon besteht, über das eine Verbindung zu einem Kartenserver herstellbar ist.

5. Handheld Computer nach Anspruch 4, **dadurch gekennzeichnet, dass** die Datenfunkübertragungseinrichtung als Funkübertragungsstandard GSM, UMTS oder GPRS verwendet.

6. Handheld Computer nach einem der Ansprüche 1 bis 5, **dadurch gekennzeichnet, dass** der Verkehrsinformationsempfänger (18) aus einem RDS-Empfänger besteht.

7. Handheld Computer nach einem der Ansprüche 1 bis 5, **dadurch gekennzeichnet, dass** der Verkehrsinformationsempfänger (18) aus einem DAB-Empfänger besteht.

8. Handheld Computer nach einem der Ansprüche 1 bis 7, **dadurch gekennzeichnet, dass** der Positionsdatenempfänger aus einem Satellitenempfänger besteht.

9. Handheld Computer nach einem der Ansprüche 1 bis 7, **dadurch gekennzeichnet, dass** der Positionsdatenempfänger aus einem Cell-Tracking-Empfänger zur funkzellen-basierten Ortsbestimmung besteht.

10. Verfahren zum Navigieren mit einem eine CPU (4), mindestens einen Speicher und mindestens eine Hardwareschnittstelle (8) aufweisenden Handheld Computer (1),
**dadurch gekennzeichnet, daß**
- einerseits digitale Positionsdaten von einem Positionsdatenempfänger (16) und andererseits digitale Verkehrsinformationsdaten von einem Verkehrsinformationsempfänger (18) zu einem einzigen seriellen Datensignalstrom in einer Anschlusseinrichtung (10) zusammengefasst werden,
- der serielle Datensignalstrom über eine einzige Hostschnittstelle (20) der Anschlusseinrichtung (10) auf den Handheld Computer (1) übertragen wird, und
- der serielle Datensignalstrom in dem Handheld Computer (1) mit einem Dekoderprogramm zur Weiterverarbeitung durch ein Anwendungsprogramm in die ursprünglichen Dateninhalte des Positionsdatenempfängers (16) und des Verkehrsinformationsempfängers (18) aufgeteilt wird.

## Claims

1. A handheld computer (1) with a user interface (2), with a CPU (4), with at least one memory and with at least one hardware interface (8),
**characterized in**
**that** the CPU (4) is connected, via a single hardware interface (8), with a terminal means (10) with at least two bidirectional hardware interfaces (12,14,15), which is controlled by a computing unit (9) and, on the one hand, receives digital positional data from a positional data receiver (16) and, on the other hand, receives digital traffic information data from a traffic information receiver (18) and combines these digital data signals to a single serial data signal flow that is adapted to be transmitted via the single host interface (20) of the terminal means (10) and the single hardware interface (8) of the handheld computer (1), that a decoder program is adapted to be read in a memory area (22) of the handheld computer (1), which, for the further processing by an application program, divides the serial data signal flow from the terminal means (10) into the original data contents of the positional data receiver (16) and the traffic information receiver (18).

2. The handheld computer according to claim 1, **characterized in that** a data communication means is connected to a further bidirectional hardware interface (15) of the terminal means (10).

3. The handheld computer according to claim 2, **characterized in that** the data communication means consists of a data radio transmission means.

4. The handheld computer according to claim 3, **characterized in that** the data radio transmission means consists of a radio telephone via which a connection to a map server can be established.

5. The handheld computer according to claim 4, **characterized in that** the data radio transmission means uses GSM, UMTS or GPRS as a radio transmission standard.

6. The handheld computer according to one of claims 1 to 5, **characterized in that** the traffic information receiver (18) consists of a RDS receiver.

7. The handheld computer according to one of claims 1 to 5, **characterized in that** the traffic information receiver (18) consists of a DAB receiver.

8. The handheld computer according to one of claims 1 to 7, **characterized in that** the positional data receiver consists of a satellite receiver.

9. The handheld computer according to one of claims 1 to 7, **characterized in that** the positional data receiver consists of a cell tracking receiver for position finding based on radio cells.

10. A method for navigating with a handheld computer (1) comprising a CPU (4), at least one memory and at least one hardware interface (8),
**characterized in that**
- digital positional data from a positional data receiver (16), on the one hand, and digital traffic information data from a traffic information receiver (18), on the other hand, are combined to a single serial data signal flow in a terminal means (10),
- the serial data signal flow is transmitted via a single host interface (20) of the terminal means (10) to the handheld computer (1), and
- the serial data signal flow in the handheld computer (1), for being further processed by an application program, is divided into the original data contents of the positional data receiver (16) and the traffic information receiver (18) by means of a decoder program.

## Revendications

1. Ordinateur portable (1) comportant une interface utilisateur (2), une CPU (4), au moins une mémoire et au moins une interface hardware (8),
**caractérisé en ce que**,
la CPU (4), est reliée par une interface hardware unique (8) à un dispositif de connexion (10), commandé par une unité de calcul (9), comportant au moins deux interfaces hardware bidirectionelles (12,14,15), lequel dispositif de connexion reçoit d'une part des données numériques de position d'un récepteur de données de position (16) et d'autre part des données numériques d'informations sur la circulation d'un récepteur d'informations sur la circulation (18) et regroupe ces signaux de données numériques en un unique flux séquentiel de signaux de données, qui peut être transmis à travers l'unique interface-hôte (20) du dispositif de connexion (10) et l'unique interface hardware (8) de l'ordinateur portable (1), **en ce qu'**un programme de décodage peut être lu dans une zone de mémoire (22) de l'ordinateur portable (1), lequel programme divise le flux séquentiel de signaux de données provenant du dispositif de connexion (10), pour un traitement ultérieur par un programme d'utilisation, en les contenus de données initiaux du récepteur de données de position (16) et du récepteur d'informations de circulation (18).

2. Ordinateur portable selon la revendication 1, **caractérisé en ce qu'**un dispositif de communication des données est raccordé à une autre interface hardware bidirectionnelle (15) du dispositif de connexion (10).

3. Ordinateur portable selon la revendication 2, **caractérisé en ce que** le dispositif de communication de données consiste en un dispositif de transmission radio de données.

4. Ordinateur portable selon la revendication 3; **caractérisé en ce que** le dispositif de transmission radio de données consiste en un radiotéléphone, avec lequel une liaison avec un serveur de cartes peut être établie.

5. Ordinateur portable selon la revendication 4, **caractérisé en ce que** le dispositif de transmission radio de données utilise le GSM, l'UMTS ou le GPRS comme standard de transmission radio.

6. Ordinateur portable selon l'une des revendications 1 à 5, **caractérisé en ce que** le récepteur d'informations de circulation (18) consiste en un récepteur RDS.

7. Ordinateur portable selon l'une des revendications 1 à 5, **caractérisé en ce que** le récepteur d'informations de circulation (18) consiste en un récepteur DAB.

8. Ordinateur portable selon l'une des revendications 1 à 7, **caractérisé en ce que** le récepteur d'informations de position consiste en un récepteur satellite.

9. Ordinateur portable selon l'une des revendications 1 à 7, **caractérisé en ce que** le récepteur d'informations de position consiste en un récepteur cell-tracking pour une localisation basée sur une cellule radio.

10. Procédé de navigation avec un ordinateur portable comprenant une CPU (4), au moins une mémoire et au moins une interface hardware (8),
**caractérisé en ce que**
- d'une part des données de position numériques venant d'un récepteur de donnés de position (16) et d'autre part des données numériques d'informations de circulation venant d'un récepteur d'informations de circulation (18), sont réunies en un unique flux séquentiel de signaux de données dans un dispositif de connexion (10),
- le flux séquentiel de signaux de données est transmis à travers une unique interface-hôte (20) du dispositif de connexion (10) vers l'ordinateur portable (1), et
- le flux séquentiel de signaux de données est divisé dans l'ordinateur portable (1) avec un programme de décodage, pour un traitement ultérieur par un programme d'utilisation, en les contenus initiaux de données du récepteur de données de position (16) et du récepteur d'informations de circulation (18).
